Europäisches Patentamt

European Patent Office

Office européen des brevets

(19)

(11) Publication number: **0 131 975**
**B1**

(12) **EUROPEAN PATENT SPECIFICATION**

(45) Date of publication of patent specification: **24.08.88**

(51) Int. Cl.⁴: **C 10 G 35/095, B 01 J 37/04**

(21) Application number: **84200809.6**

(22) Date of filing: **07.06.84**

(54) **Process for upgrading a gasoline.**

(30) Priority: **14.07.83 NL 8302520**
**14.07.83 NL 8302519**
**14.07.83 NL 8302518**

(43) Date of publication of application:
**23.01.85 Bulletin 85/04**

(45) Publication of the grant of the patent:
**24.08.88 Bulletin 88/34**

(84) Designated Contracting States:
**AT BE CH DE FR GB IT LI NL SE**

(56) References cited:
**EP-A-0 030 751**
**EP-A-0 051 326**
**FR-A-2 515 985**
**GB-A-2 021 636**
**US-A-4 188 336**
**US-A-4 208 305**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Kieffer, Eduard Philip
Badhuisweg 3
NL-1031 CM Amsterdam (NL)**
Inventor: **Sie, Swan Tiong
Badhuisweg 3
NL-1031 CM Amsterdam (NL)**

(74) Representative: **Aalbers, Onno et al
P.O. Box 302
NL-2501 CH The Hague (NL)**

Courier Press, Leamington Spa, England.

## Description

The invention relates to a process for upgrading a gasoline. By gasoline is understood any hydrocarbon product containing hydrocarbons with at least 4 carbon atoms ($C_4^+$) and having such a boiling range that at least 98% wt of the product is recovered at 250°C.

Such a hydrocarbon product can be obtained in various ways, e.g. by distillation of a crude oil, by subjecting heavy hydrocarbons or a heavy hydrocarbon fraction to a cracking process, i.e. catalytic cracking, hydrocracking or thermal cracking or to a catalytic reforming process. It is preferred to subject a gasoline having a relatively low octane number to an upgrading treatment before using it as a mixing component for motor gasoline. In this treatment it is important that the $C_5^+$-hydrocarbon fraction remains as large as possible, since the yield of normally gaseous hydrocarbons should be limited.

Recently, novel crystalline metal silicates of a special structure were synthesized which show catalytic activity in the conversion of non-aromatic organic compounds, such as olefins, into aromatic hydrocarbons. The catalytic performance of these silicates is to a great extent insusceptible to the presence of sulphur and nitrogen compounds in the feed. The crystalline metal silicates concerned are characterized in that after one hour's calcination in air at 500°C they have the following properties:

a) an X-ray powder diffraction pattern in which the strongest lines are the four lines mentioned in Table A,

TABLE A

$d[10^{-10}m]$

---

11.1±0.2
10.0±0.2
3.84±0.07
3.72±0.06, and

b) in the formula which expresses the composition of the silicate in moles of the oxides and which, in addition to $SiO_2$, includes $Al_2O_3$ or $Fe_2O_3$ or both $Fe_2O_3$ and $Al_2O_3$, the $SiO_2/(Fe_2O_3+Al_2O_3)$ molar ratio is higher than 10.

An investigation into the use of the above-mentioned crystalline iron, aluminium, and iron/aluminium silicates as catalysts for upgrading a gasoline fraction obtained by catalytic cracking has shown that although, generally, by using crystalline silicates belonging to this group a reduction of the olefins content as well as a rise in the aromatics content can be achieved, there are a number of cases in which the results obtained are not good enough to decide to use them on a technical scale.

According to the present invention in upgrading of gasoline fractions use is made of a mixture of two catalysts, one of which is a zinc-containing composition which, in addition to zinc, comprises chromium and/or aluminium and which composition has been prepared by calcining one or more precipitates obtained by adding a basic reacting substance to one or more aqueous solutions containing salts of the metals involved, the other being a crystalline metal silicate as described hereinbefore.

Said catalyst mixtures were developed some time ago for the conversion of low-hydrogen synthesis gases into aromatic hydrocarbon mixtures. In this conversion the zinc-containing composition had a double function. Firstly, this catalyst component's function was to catalyze the conversion of synthesis gas into methanol (methanol synthesis function). Secondly, this catalyst component's function was to catalyze the formation of hydrogen from the excess carbon monoxide present and the water formed in the conversion of methanol into aromatic hydrocarbons (CO shift function). In view of the above, the present finding, by which the selectivity of the metal silicate, when the latter is used as catalyst for upgrading a gasoline such as obtained by catalytic cracking, can be considerably enhanced by mixing the metal silicate with said zinc-containing composition, is considered to be extremely surprising.

The present patent application therefore more generally relates to a process for upgrading the octane number of a gasoline through contacting such a gasoline with a mixture of two catalysts, one of which is the above-mentioned zinc-containing composition and the other a crystalline metal silicate as defined above.

In the process according to the invention the starting material can be any gasoline, having high or low aromatics, olefins, paraffins or naphthenes contents. A gasoline very suitable for the process according to the invention, is a gasoline prepared by applying catalytic cracking to heavy hydrocarbon oils such as atmospheric gas oils, vacuum gas oils, deasphalted distillation residues and mixtures thereof. Preference is given to the use of a gas oil as feed. Catalytic cracking on a commercial scale is generally carried out in a continuous process using an arrangement which substantially consists of a vertically disposed cracking reactor and a catalyst regenerator. Hot regenerated catalyst leaving the regenerator is suspended in the oil to be cracked and then the mixture is passed through the cracking reactor in upward direction. The deactivated catalyst is separated from the cracked product, stripped and transferred to the regenerator. The cracked product is separated to form a light fraction having a high content of $C_3$ and $C_4$ olefins, a gasoline fraction and several heavy fractions such as a light cycle oil, a middle cycle oil, a heavy cycle oil and a slurry oil. The gasoline fraction so obtained has a relatively high olefins content and a relatively low aromatics content, the remainder being paraffins and/or naphthenes.

Another very suitable starting material is a gasoline prepared by catalytic reforming of naphtha. Catalytic reforming is generally carried out over a platinum containing catalyst. The product of the reforming process has a relatively high aromatics content and contains practically no olefins, the remainder being paraffins and/or naphthenes.

The crystalline metal silicate which in the present process is used as catalyst component has a $SiO_2/(Fe_2O_3+Al_2O_3)$ molar ratio higher than 10. In case an iron silicate is used as metal silicate, its $SiO_2/Fe_2O_3$ molar ratio is preferably lower than 250. When applying an iron-aluminium silicate the $SiO_2/Fe_2O_3$ molar ratio is suitably lower than 250. The $SiO_2/Al_2O_3$ molar ratio can have then any value. Preference, however, is given to an iron-aluminium silicate having a $SiO_2/Fe_2O_3$ molar ratio lower than 250 and a $SiO_2/Al_2O_3$ molar ratio of at least 500. When the metal silicate used is an aluminium silicate the $SiO_2/Al_2O_3$ molar ratio is preferably lower than 500. Preference is given to the use either of crystalline iron silicates having a $SiO_2/Fe_2O_3$ molar ratio higher than 25, but lower than 250 and in particular of 50—175, or of crystalline iron/aluminium silicates having a $SiO_2/Fe_2O_3$ molar ratio higher than 25, but lower than 250 and in particular of 50—175 and a $SiO_2/Al_2O_3$ molar ratio of at least 500, but lower than 1200 and in particular of at least 500, but lower than 800. When a crystalline aluminium silicate is used, preference is given to the use of a silicate having a $SiO_2/Al_2O_3$ molar ratio higher than 25, but lower than 500 and in particular of 50—400.

The crystalline silicates are defined, among other things, by the X-ray powder diffraction pattern which they show after one hour's calcination in air at 500°C. On this pattern the strongest lines should be the four lines mentioned in Table A. The complete X-ray powder diffraction pattern of a typical example of the present crystalline silicates after one hour's calcination in air at 500°C is given in Table B.

TABLE B

| $d[10^{-10}m]$ | Rel. int. | $d[10^{-10}m]$ | Rel. int. |
|---|---|---|---|
| 11.1 | 100 | 3.84(D) | 57 |
| 10.0(D) | 70 | 3.72(D) | 31 |
| 8.93 | 1 | 3.63 | 16 |
| 7.99 | 1 | 3.47 | <1 |
| 7.42 | 2 | 3.43 | 5 |
| 6.68 | 7 | 3.34 | 2 |
| 6.35 | 11 | 3.30 | 5 |
| 5.97 | 17 | 3.25 | 1 |
| 5.70 | 7 | 3.05 | 8 |
| 5.56 | 10 | 2.98 | 11 |
| 5.35 | 2 | 2.96 | 3 |
| 4.98(D) | 6 | 2.86 | 2 |
| 4.60 | 4 | 2.73 | 2 |
| 4.35 | 5 | 2.60 | 2 |
| 4.25 | 7 | 2.48 | 3 |
| 4.07 | 2 | 2.40 | 2 |
| 4.00 | 4 | | |

(D)=doublet

The crystalline silicates can be prepared starting from an aqueous mixture comprising the following compounds: one or more silicon compounds, one or more compounds which contain a monovalent organic cation (R) or from which such a cation is formed during the preparation of the silicate, one or more compounds in which iron is present in trivalent form, and/or one or more aluminium compounds and one or more compounds of an alkali metal (M). The preparation is carried out by keeping the mixture at an elevated temperature until the silicate has formed, and subsequently separating the silicate crystals from the mother liquor and washing, drying and calcining the crystals. In the aqueous mixture from which the silicates are prepared the various compounds should be present in the following ratios, expressed in moles of the oxides:

$M_2O$: $SiO_2 < 0.35$,
$R_2O$: $SiO_2 = 0.01—0.5$,
$SiO_2$: $(Fe_2O_3 + Al_2O_3) > 10$, and
$H_2O$: $SiO_2 = 5—100$.

If in the preparation of the crystalline silicates the starting material is an aqueous mixture in which one or more alkali metal compounds are present, the crystalline silicates obtained will contain alkali metal. Depending on the concentration of alkali metal compounds in the aqueous mixture the crystalline silicates obtained may contain more than 1% wt alkali metal. Since the presence of alkali metal in the crystalline silicates has an unfavourable influence on their catalytic properties, it is common practice in the case of crystalline silicates with a relatively high alkali metal content to reduce this content before using these silicates as catalysts. A reduction of the alkali metal content to less than 0.05% wt is usually sufficient to this end. The reduction of the alkali metal content of crystalline silicates can very suitably be effected by treating the silicates once or several times with a solution of an ammonium compound. During this treatment alkali metal ions are exchanged for $NH_4^+$ ions and the silicate is converted to the $NH_4^+$ form. The $NH_4^+$ form of the silicate is converted to the $H^+$ form by calcination. The formula of the calcined metal silicate expressed in moles of oxides, is:

$$(1.0 \pm 0.3)X_2O \cdot a\ Fe_2O_3 \cdot b\ Al_2O_3 \cdot c\ SiO_2,$$

in which
x = alkali metal or hydrogen
$a \geqslant 0$,
$b \geqslant 0$,
$a + b = 1$,
$c > 10$.

In the preparation of the catalyst mixtures used in the present process use is made of one or more precipitates in which zinc occurs together with chromium and/or aluminium and which precipitates have been obtained by adding a basic reacting substance to one or more aqueous solutions of salts of the metals involved. Preference is given to the use of precipitates in which, in addition to zinc, chromium occurs, in particular precipitates in which the atomic percentage of zinc, calculated on the sum of zinc and chromium, is at least 60% and more specifically 60—80%. The metal-containing precipitates may be prepared by precipitation of each of the metals individually or by co-precipitation of the desired metal combination. Preference is given to the use of a co-precipitate obtained by adding a basic reacting substance to an aqueous solution containing all the metals involved. This co-precipitation is preferably carried out in a mixing unit with a continuous supply of an aquoeus solution containing the metal salts involved and an aqueous solution of the basic reacting substance in a stoichiometric quantity calculated on the metals, and with a continuous discharge of the co-precipitate formed.

The preparation of the catalyst mixtures used in the present process can be carried out in various ways. The precipitate may be calcined and then mechanically mixed with the crystalline silicate. The catalyst mixture may also very suitably be prepared by spray-drying. To this end the crystalline silicate is dispersed in water together with the precipitate mentioned hereinbefore, the dispersion thus obtained is spray-dried, and the spray-dried material is calcined. Spray-drying is a method used on a commercial scale for many years past for the preparation of small spherical particles from a solid material or a mixture of solids. The process is carried out by atomizing a dispersion in water of the material to be spray-dried through a nozzle or from a rotating disc into a hot gas. The process is particularly suitable for achieving intimate contact between different materials. In view of the form, size and strength of the catalyst particles prepared by spray-drying they are very suitable for use in a fluidized state.

As regards the ratio of the zinc-containing composition to the crystalline silicate in the catalyst mixtures used in the present process, preference is given to the use of catalyst mixtures which per part by weight silicate contain 0.1—12.5, and in particular 0.5—8 parts by weight metal oxides coming from the precipitate.

As starting material for the process according to the invention any gasoline fraction may be used. So it is possible to subject a complete gasoline product to the upgrading process. By the complete gasoline product is meant the $C_4^+$-fraction with such a boiling range that 98% wt of the gasoline is recovered at a temperature between 180 and 250°C.

In case the product has been obtained by catalytic cracking, preferably not the complete gasoline fraction present in the product is subjected to upgrading, but only a fraction separated from the cracked product by distillation. Therefore, the starting material is suitably a fraction of the complete gasoline obtained by catalytic cracking. The great advantage of such a process over a process in which the complete gasoline fraction is subjected to upgrading is that in the former process a much smaller plant will suffice.

More preferably, the starting material is a heavy fraction obtained by distillation from the complete gasoline such that

$$0.55 < \frac{a}{b} < 0.80,$$

wherein

a = the aromatics content (%wt) of the complete gasoline, and
b = the aromatics content (%wt) of the heavy fraction.

The fractions which may be considered to constitute a complete gasoline fraction present in a product obtained by catalytic cracking have higher aromatics contents in proportion as they are heavier. This means that when from a complete gasoline fraction present in the product obtained by catalytic cracking a heavy frction is separated by distillation, this heavy fraction will always have a higher aromatics content than the complete gasoline fraction. Since their capability of catalyzing the conversion of non-aromatic organic compounds into aromatic hydrocarbons is one of the most important properties of the metal silicates, one would expect that when these silicates are used as catalysts, the results achieved would be better according as the feed contains more non-aromatic compounds.

It is therefore considered to be surprising that the selectivity of the upgrading, i.e. the loss of $C_5^+$ hydrocarbons per point gained in *Research Octane Number* without the additon of lead (ROM-O) $\Delta C_5^+/\Delta RON-O$, is improved when only said heavy fraction is subjected to the upgrading.

In another embodiment of upgrading is applied to a gasoline fraction comprising the light and middle fraction of a complete gasoline. It has been found that catalyst deactivation is reduced in this case.

Since both the catalyst deactivation is decreased and the selectivity of the upgrading is increased when only the middle fraction is subjected to the upgrading, the starting material is preferably a medium fraction obtained by distillation from the complete gasoline consisting of a light, a middle and a heavy fraction, such that

$$0.35 < \frac{a}{b} < 0.45$$

and

$$0.30 < \frac{d}{c} < 0.80,$$

wherein

a = the aromatics content (%wt) of the complete gasoline,
b = the aromatics content (%wt) of the heavy fraction,
c = the aromatics content (%wt) of the middle fraction, and
d = the aromatics content (%wt) of the mixture of the light and the middle fraction.

In the present preferred embodiment, the separation of the light from the middle fraction is carried out in such a way that the relation

$$0.30 < \frac{d}{c} < 0.80$$

is satisfied. Preferably, the separation is carried out in such a way that the relation

$$0.35 < \frac{d}{c} < 0.70$$

is satisfied.

When only a gasoline fraction is subjected to the upgrading according to the invention, preferably the treated product is mixed with the untreated gasoline fraction(s), so that once again a complete gasoline product is obtained.

The present process can very suitably be carried out by passing the feed to upward or downward direction through a vertically disposed reactor containing a fixed or moving bed of the catalyst mixture. Suitable conditions for carrying out the process are a temperature of 300—600°C, a pressure of 1—50 bar and a space velocity of 0.1—10 kg · kg$^{-1}$ · h$^{-1}$. The process is preferably carried out under the following conditions: a temperature of 400—500°C, a pressure of 2.5—25 bar and a space velocity of 0.2—3 kg · kg$^{-1}$ · h$^{-1}$. The process may be carried out in the presence of hydrogen, if desired.

The invention is now illustrated by the following example.

Example
Preparation of catalyst 1

An iron/aluminium silicate was prepared by heating a mixture of sodium hydroxide, tetrapropylammonium hydroxide, ferric nitrate, sodium aluminate and amorphous silica in water in an autoclave under autogenous pressure for 24 hours at 150°C. After cooling of the reaction mixture the silicate formed was filtered off, washed with water until the pH of the wash water was about 8 and dried at 120°C. After one hour's calcination in air at 500°C the silicate had the following properties:

a) an X-ray powder diffraction pattern substantially corresponding with that mentioned in Table B,
b) a $SiO_2/Al_2O_3$ molar ratio of 600, and
c) a $SiO_2/Fe_2O_3$ molar ratio of 130.

The iron/aluminium silicate prepared in the above-described manner was boiled with a 1.0 molar ammonium nitrate solution, washed with water, boiled again with a 1.0 molar ammonium nitrate solution, washed and dried at 120°C. Catalyst 1 was prepared by pressing and grinding the dried material to have a particle size of 0.4 mm and calcining the ground material at 500°C.

Preparation of catalyst 2

An aluminium silicate was prepared by heating mixtures of sodium hydroxide, tetrapropylammonium hydroxide, amorphous silica and sodium aluminate in water in an autoclave under autogenous pressure for 24 hours at 150°C. After cooling of the reaction mixtures the silicate formed was filtered off, washed with water until the pH of the wash water was about 8 and dried at 120°C. After one hour's calcination in air at 500°C the silicate had the following properties:

a) an X-ray powder diffraction pattern substantially corresponding with that mentioned in Table B,
b) a $SiO_2/Al_2O_3$ molar ratio of 330.

The metal silicate prepared in the above-described manner was boiled with a 1.0 molar ammonium nitrate solution, washed with water, boiled again with a 1.0 molar ammonium nitrate solution, washed and dried at 120°C. Catalyst 2 was prepared by pressing and grinding the dried material to have a particle size of 0.4 mm and calcining the ground material at 500°C.

Preparation of catalyst 3

Such quantities of $Zn(NO_3)_2$ · 6 aq and $Cr(NO_3)_3$ · 9 aq were dissolved in water as to produce a solution in which the Zn/(Zn+Cr) atomic ratio was 0.67. This solution, together with a stoichiometric quantity of a 10% aqueous $NH_3$ solution, was pumped with stirring through a mixing unit which was kept at a temperature of 20°C. The Zn/Cr co-precipitate obtained was collected and left to age for one hour with stirring at 20°C. The solid material was filtered off, washed with water until the wash water was free of $NO_3^-$ ions and dried at 120°C. Catalyst 3 was prepared by pressing and grinding the dried material to have a particle size of 0.4 mm and calcining the ground material at 400°C.

Preparation of catalyst 4

This catalyst was prepared by mixing catalysts 1 and 3 in a weight ratio of 1:5.

Preparation of catalyst 5

This catalyst was prepared by mixing Catalysts 2 and 3 in a weight ratio of 1:5.

Catalysts 1, 2, 4 and 5 were tested in ten experiments (Experiments 1—10) for upgrading gasoline produced either by catalytic cracking or by catalytic reforming.

Gasoline A, being a complete gasoline product obtained by catalytic cracking, had a RON-0 of 92.3.

Gasoline B, being a complete gasoline product obtained by catalytic cracking, too, had a RON-0 of 85.4.

Gasoline C was obtained as the heavy fraction upon separation by distillation of Gasoline B to form a light and a heavy fraction.

Gasoline D was obtained as the middle fraction when separating Gasoline A by distillation to form on the one hand a mixture of a light and a middle fraction and on the other hand a heavy fraction, followed by separation of the mixture of the light and middle fractions by distillation to form a light and a middle fraction.

Gasoline E, being a complete gasoline product obtained by catalytic reforming, had a RON-0 of 90.0.

The distillation temperatures and the aromatics contents of Gasolines A—E as well as the aromatics content of a number of fractions obtained in the preparation of Gasoline D are given in Table C. The letters a, b, c and d used in the Table refer to the aromatics contents of the complete gasoline fracton, the heavy fraction, the middle fraction and the mixture of the light and middle fractions, respectively. The experiments were carried out in a reactor containing a fixed catalyst bed. In all the experiments were used a temperature of 450°C and a pressure of 5 bar. The space velocities used in the experiments (calculated on the quantities of silicate present in the catalysts) and the results of the experiments are listed in Table D.

When the term "total product" is used in Table D, it refers for the experiments in which Gasoline fractions C and D were used as starting material, to the mixture of the untreated fractions and the product obtained in the catalytic treatment of the specific fraction.

The values given in Table D for $\Delta C_5^+/\Delta RON\text{-}O$ (loss of $C_5^+$ hydrocarbons per point gained in RON-O) represent a criterion of selectivity. According as the $\Delta C_5^+/\Delta RON\text{-}O$ is lower, the catalyst has better selectivity.

TABLE C

| Gasoline | Aromatics content, %wt | | | | Distillation temperatures, °C | |
|---|---|---|---|---|---|---|
| | a | b | c | d | 10 %wt recovery | 98 %wt recovery |
| A | 24.2 | | | | 9 | 228 |
| B | 27.0 | | | | 23 | 226 |
| C | | 40.3 | | | 91 | 228 |
| D | | 62.1 | 23.2 | 11.6 | 87 | 158 |
| E | 59.6 | | | | 25 | 198 |

TABLE D

| Experiment No. | 1 | 2 | 3 | 4 | 5 | 6 | 7 | 8 | 9 | 10 |
|---|---|---|---|---|---|---|---|---|---|---|
| Catalyst No. | 1 | 4 | 1 | 4 | 1 | 4 | 2 | 5 | 1 | 4 |
| Space velocity $g \cdot g^{-1} \cdot h^{-1}$ | 0.5 | 1.2 | 0.5 | 1.9 | 0.5 | 1.2 | 0.5 | 3.0 | 0.5 | 3.0 |
| Feed gasoline | A | A | B | B | C | C | D | D | E | E |
| RON-O of total product | 95.0 | 95.2 | 97.0 | 96.7 | 96.6 | 97.5 | 95.0 | 94.8 | 97.0 | 97.2 |
| $\Delta C_5^+/\Delta RON\text{-}O$ %wt | 5.1 | 3.9 | 2.1 | 1.5 | 1.3 | 0.9 | 3.3 | 2.3 | 1.0 | 0.7 |
| $\Delta C_5^+$ %wt | 13.7 | 11.3 | 24.3 | 16.9 | 14.5 | 10.9 | 8.9 | 5.7 | 7.0 | 4.8 |
| $\Delta RON\text{-}O$ | 2.7 | 2.9 | 11.6 | 11.3 | 11.2 | 12.1 | 2.7 | 2.5 | 7.0 | 7.2 |

Of the experiments mentioned in Table D only Experiments 2, 4, 6, 8 and 10 are experiments according to the invention. Comparison of the results of Experiments 1 and 3 with those of Experiments 2 and 4 shows that the loss of $C_5^+$ product in the total product is considerably reduced when a silicate mixed with a zinc-containing composition is applied instead of the silicate alone, while the increase in octane number is only slightly influenced. The selectivity ($\Delta C_5^+/\Delta RON\text{-}O$) is therefore substantially improved.

As shown in the Experiment 5—8, the loss in $C_5^+$ products can be further reduced by subjecting only a fraction of the complete gasoline to the upgrading treatment, the best results being acquired by the use of a silicate mixed with a zinc-containing composition.

The Experiments 9 and 10 show that the process according to the invention gives also excellent results when it is applied to a gasoline obtained by catalytic reforming. Since catalytic reformates have virtually no olefins, the improvements in RON number obtained are rather surprising.

**Claims**

1. A process for upgrading the octane number of a gasoline, characterized in that the gasoline is contacted with a mixture of two catalysts, one of which is a zinc-containing composition which, in addition

7

**0 131 975**

to zinc, comprises chromium and/or aluminium and which composition has been prepared starting from one or more precipitates obtained by adding a basic reacting substance to one or more aqueous solutions containing salts of the metals involved, the other being a crystalline metal silicate which, after one hour's calcination in air at 500°C has the following properties:

a) an X-ray powder diffraction pattern in which the strongest lines are the four lines mentioned in Table A,

TABLE A

$d[10^{-10}m]$

11.1±0.2
10.0±0.2
3.84±0.07
3.72±0.06, and

b) in the formula which expresses the composition of the silicate in moles of the oxides and which, in addition to $SiO_2$, includes $Al_2O_3$ or $Fe_2O_3$ or both $Fe_2O_3$ and $Al_2O_3$, the $SiO_2/(Fe_2O_3+Al_2O_3)$ molar ratio is higher than 10.

2. A process as claimed in claim 1, characterized in that the metal silicate is an iron silicate having a $SiO_2/Fe_2O_3$ molar ratio lower than 250.

3. A process as claimed in claim 1, characterized in that the metal silicate is an iron-aluminium silicate having a $SiO_2/Fe_2O_3$ molar ratio lower than 250 and a $SiO_2/Al_2O_3$ molar ratio of at least 500.

4. A process as claimed in claim 1, characterized un that the metal silicate is an aluminium silicate having a $SiO_2/Al_2O_3$ molar ratio lower than 500.

5. A process as claimed in any one of claims 1—4, characterized in that the zinc-containing composition in addition to zinc comprises chromium, and that the atomic percentage of zinc calculated on the sum of zinc and chromium is 60—80%.

6. A process as claimed in any one of claims 1—5, characterized in that the catalyst mixture has been prepared by spray-drying.

7. A process as claimed in any one of claims 1—6, characterized in that per part by weight silicate the catalyst mixture contains 0.1—12.5 parts by weight metal oxides coming from the precipitate.

8. A process as claimed in any one of claims 1—7, characterized in that the starting material is a gasoline obtained by catalytic cracking.

9. A process as claimed in any one of claims 1—7, characterized in that the starting material is a gasoline obtained by catalytic reforming.

10. A process as claimed in claim 8, characterized in that the starting material is a fraction of a complete gasoline obtained by catalytic cracking.

11. A process as claimed in claim 10, characterized in that the gasoline fraction is a heavy fraction obtained by distillation from the complete gasoline such that

$$0.55 < \frac{a}{b} < 0.80,$$

wherein

a=the aromatics content (%wt) of the complete gasoline, and
b=the aromatics content (%wt) of the heavy fraction.

12. A process as claimed in claim 10, characterized in that the gasoline fraction is a middle fraction obtained by distillation from the complete gasoline consisting of a light, a middle and a heavy fraction, such that

$$0.35 < \frac{a}{b} < 0.45$$

and

$$0.30 < \frac{d}{c} < 0.80,$$

wherein

a=the aromatics content (%wt) of the complete gasoline,
b=the aromatics content (%wt) of the heavy fraction,
c=the aromatics content (%wt) of the middle fraction, and
d=the aromatics content (%wt) of the mixture of the light and the middle fraction.

8

# 0 131 975

**Patentansprüche**

1. Verfahren zur Verbesserung der Oktanzahl eines Benzins, dadurch gekennzeichnet, daß das Benzin mit einem Gemisch aus zwei Katalysatoren in Berührung gebracht wird, wovon der eine eine Zink enthaltende Zusammensetzung ist, die, zusätzlich zu Zink, Chrom und/oder Aluminium enthält und welche Zusammensetzung aus einem oder mehreren Präzipitaten bereitet worden ist, die durch Zusetzen einer basisch reagierenden Substanz zu einer oder zu mehreren wäßrigen Lösungen, die Salze der involvierten Metalle enthalten, erhalten worden sind, während der andere Katalysator ein kristallines Metallsilikat ist, das nach einstündigem Kalzinieren in Luft bei 500°C die folgenden Eigenschaften aufweist:

a) ein Röntgenstrahlen-Pulverdiffraktionsmuster, in welchem die stärksten Linien die vier, in Tabelle A angeführten Linien sind;

TABELLE A

$d[10^{-10}m]$

11,1±0,2
10,0±0,2
3,84±0,07
3,72±0,06, und

b) in der Formel, welche die Zusammensetzung des Silikats, ausgedrückt in Molen der Oxide, darstellt und worin, zusätzlich zu $SiO_2$, $Al_2O_3$ oder $Fe_2O_3$ oder sowohl $Fe_2O_3$ als auch $Al_2O_3$ vorliegen, ist das $SiO_2/(Fe_2O_3+Al_2O_3)$-Molverhältnis größer als 10.

2. Verfahren nach Anspruch 1, dadurch gekennzeichnet, daß das Metallsilikat ein Eisensilikat mit einem $SiO_2/Fe_2O_3$-Molverhältnis von kleiner als 250 ist.

3. Verfahren nach Anspruch 1, dadurch gekennzeichnet, daß das Metallsilikat ein Eisen-Aluminiumsilikat mit einem $SiO_2/Fe_2O_3$-Molverhältnis von kleiner als 250 und einem $SiO_2/Al_2O_3$-Molverhältnis von wenigstens 500 ist.

4. Verfahren nach Anspruch 1, dadurch gekennzeichnet, daß das Metallsilikat ein Aluminiumsilikat mit einem $SiO_2/Al_2O_3$-Molverhältnis von kleiner als 500 ist.

5. Verfahren nach einem der Ansprüche 1 bis 4, dadurch gekennzeichnet, daß die Zink enthaltende Zusammensetzung, zusätzlich zu Zink, Chrom enthält und daß der Atomprozentsatz von Zink, berechnet auf die Summe von Zink und Chrom, 60 bis 80% beträgt.

6. Verfahren nach einem der Ansprüche 1 bis 5, dadurch gekennzeichnet, daß das Katalysatorgemisch durch Sprühtrocknen hergestellt worden ist.

7. Verfahren nach einem der Ansprüche 1 bis 6, dadurch gekennzeichnet, daß das Katalysatorgemisch je Gewichtsteil Silikat 0,1 bis 12,5 Gewichtsteile aus dem Präzipitat stammende Metalloxide enthält.

8. Verfahren nach einem der Ansprüche 1 bis 7, dadurch gekennzeichnet, daß das Ausgangsmaterial ein durch katalytisches Cracken erhaltenes Benzin ist.

9. Verfahren nach einem der Ansprüche 1 bis 7, dadurch gekennzeichnet, daß das Ausgangsmaterial ein durch katalytisches Reformieren erhaltenes Benzin ist.

10. Verfahren nach Anspruch 8, dadurch gekennzeichnet, daß das Ausgangsmaterial eine Fraktion eines durch katalytisches Cracken erhaltenen vollständigen Benzins ist.

11. Verfahren nach Anspruch 10, dadurch gekennzeichnet, daß die Benzinfraktion eine solche, durch Destillation aus dem vollständigen Benzin erhaltene schwere Fraktion ist, daß

$$0,55 < \frac{a}{b} < 0,80,$$

worin

a=Aromatengehalt (in Gew.-%) des vollständigen Benzins und
b=Aromatengehalt (Gew.-%) der schweren Fraktion.

12. Verfahren nach Anspruch 10, dadurch gekennzeichnet, daß die Benzinfraktion eine solche, durch Destillation aus dem aus einer leichten, einer mittleren und einer schweren Fraktion bestehenden vollständigen Benzin erhaltene mittlere Fraktion ist, daß

$$0,35 < \frac{a}{b} < 0,45$$

und

$$0,30 < \frac{d}{c} < 0,80$$

9

# 0 131 975

betragen, worin

a=Aromatengehalt (Gew.-%) des vollständigen Benzins,
b=Aromatengehalt (Gew.-%) der schweren Fraktion,
c=Aromatengehalt (Gew.-%) der Mittelfraktion, und
d=Aromatengehalt (Gew.-%) des Gemisches aus leichter und mittlerer Fraktion bedeuten.

## Revendications

1. Un procédé pour améliorer l'indice d'octane d'une essence, caractérisé en ce que l'essence est mise en contact avec un mélange de deux catalyseurs, dont l'un est une composition contenant du zinc qui, en plus du zinc, comprend du chrome et/ou de l'aluminium, cette composition ayant été préparée à partir d'un ou plusieurs précipités obténus en ajoutant une substance à réaction basique à une ou plusieurs solutions aqueuses contenant des sels des métaux concernés, l'autre étant un silicate métallique cristallin qui, après calcination pendant une heure dans l'air à 500°C, a les propriétés suivantes:

a) un diagramme de diffraction des rayons X par la méthode des poudres dans lequel les lignes les plus intenses sont les quatre lignes mentionnées dans le tableau A,

TABLEAU A

$d(10^{-10}m)$

| |
|---|
| $11,1\pm0,2$ |
| $10,0\pm0,2$ |
| $3,84\pm0,07$ |
| $3,72\pm0,06$ |

b) dans la formule qui exprime la composition du silicate en moles des oxydes et qui, en plus de $SiO_2$, inclut $Al_2O_3$ ou $Fe_2O_3$ ou à la fois $Fe_2O_3$ et $Al_2O_3$, le rapport molaire $SiO_2/(Fe_2O_3+Al_2O_3)$ est supérieur à 10.

2. Un procédé selon la revendication 1, caractérisé en ce que le silicate métallique est un silicate de fer ayant un rapport molaire $SiO_2/Fe_2O_3$ inférieur à 250.

3. Un procédé selon la revendication 1, caractérisé en ce que le silicate métallique est un silicate de fer-aluminium ayant un rapport molaire $SiO_2/Fe_2O_3$ inférieur à 250 et un rapport molaire $SiO_2/Al_2O_3$ d'au moins 500.

4. Un procédé selon la revendication 1, caractérisé en ce que le silicate métallique est un silicate d'aluminium ayant un rapport molaire $SiO_2/Al_2O_3$ inférieur à 500.

5. Un procédé selon l'une quelconque des revendications 1—4, caractérisé en ce que la composition contenant du zinc comprend du chrome en plus du zinc, et que le pourcentage atomique de zinc calculé par rapport à la somme du zinc et du chrome est de 60—80%.

6. Un procédé selon l'une quelconque des revendications 1—5, caractérisé en ce que le mélange de catalyseurs a été préparé par séchage par pulvérisation.

7. Un procédé selon l'une quelconque des revendications 1—6, caractérisé en ce que, par partie en poids de silicate, le mélange de catalyseurs contient 0,1—12,5 parties en poids d'oxydes de métaux provenant des précipités.

8. Un procédé selon l'une quelconque des revendications 1—7, caractérisé en ce que la matière de départ est une essence obtenue par craquage catalytique.

9. Un procédé selon l'une quelconque des revendications 1—7, caractérisé en ce que la matière de départ est une essence obtenue par reformage catalytique.

10. Un procédé selon la revendication 8, caractérisé en ce que la matière de départ est une fraction d'une essence complète obtenue par craquage catalytique.

11. Un procédé selon la revendication 10, caractérisé en ce que la fraction d'essence est une fraction lourde obtenue par distillation à partir de l'essence complète de manière que

$$0,55 < \frac{a}{b} < 0,80,$$

où

a=la teneur en composés aromatiques (% en poids) de l'essence complète et
b=la teneur en composés aromatiques (% en poids) de la fractoin lourde.

12. Un procédé selon la revendication 10, caractérisé en ce que la fraction d'essence est une fraction moyenne obtenue par distillation à partir de l'essence complète consistant en une fraction légère, une fraction moyenne et une fraction lourde, de manière que

$$0,35 < \frac{a}{b} < 0,45$$

et

$$0,30 < \frac{d}{c} < 0,80,$$

où
a=la teneur en composés aromatiques (% en poids) de l'essence complète,
b=la teneur en composés aromatiques (% en poids) de la fraction lourde,
c=la teneur en composés aromatiques (% en poids) de la fraction moyenne et
d=la teneur en composés aromatiques (% en poids) du mélange de la fraction légère et de la fraction moyenne.